# EUROPÄISCHE PATENTSCHRIFT

(11) **EP 3 031 629 B1**
(45) Veröffentlichungstag und Bekanntmachung des Hinweises auf die Patenterteilung: **15.01.2020**
(21) Anmeldenummer: 15186140.8
(22) Anmeldetag: 22.09.2015
(51) Int. Cl.: B60C 13/00, B60C 13/02

(54) **FAHRZEUGLUFTREIFEN**
PNEUMATIC TYRE FOR A VEHICLE
PNEUMATIQUE DE VÉHICULE

(30) Priorität: 11.12.2014 DE 102014225610
(43) Veröffentlichungstag der Anmeldung: 15.06.2016
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 0 101 399
- DE-A1- 19 928 863
- DE-A1-102004 010 060
- DE-A1-102012 105 864
- US-A- 5 932 052

## Beschreibung

Die Erfindung betrifft einen Fahrzeugluftreifen, insbesondere radialer Bauart, mit einer Karkasse, mit Seitenwänden, mit einem Laufstreifen und mit einem zwischen dem Laufstreifen und der Seitenwand angeordneten Offshoulderbereich, wobei die Karkasse im Seitenwandbereich mit einem Seitenwandgummistreifen nach außen hin abgedeckt ist und wobei auf dem Seitenwandgummistreifen eine technisch wirksame Struktur sowie Beschriftungen angeordnet sind.

Ein vorgenannter Fahrzeugluftreifen ist beispielsweise aus der DE 199 06 658 A und aus der DE 10 2004 038 141 A bekannt. Es werden technisch wirksame Strukturen in Form eines Moirée-Musters (Schraffur) auf der oberen Seitenwandhälfte , also der zum Laufstreifen weisenden Seitenwandhälfte angeordnet, um mögliche herstellungsbedingte Einschnürungseffekte, welche unerwünschte optische Unebenheiten auf der Reifenseitenwand bilden, zu kaschieren. Beschriftungen sind außerhalb der technisch wirksamen Struktur angeordnet. Die reliefartigen Strukturen und Beschriftungen sind üblicherweise als Negativrelief in die Seitenwandschale der Vulkanisierform eingebracht und prägen das Positiv-Muster und die Positiv-Beschriftung während des Vulkanisiervorganges der Seitenwand des Rohreifens.

Einschnürungseffekte sind durch Überlappungsbereiche in der Karkasslage bedingt. Die Karkasslage ist aus wenigstens zwei Karkasseinzelbauteile zusammengesetzt, welche einen Überlappungsbereich aufweisen. Im Überlappungsbereich besteht ein abweichendes Festigkeits- und Elastizitätsverhalten als im übrigen Bereich der Karkasslage. Dieses führt zu optisch feststellbaren Einschnürungen.

Die Seitenwand weist weiterhin Beschriftungen auf. Dieses sind beispielsweise das Unternehmenskennzeichen, die Reifendimension und die Produktbezeichnung. Zudem weist die Seitenwand einen sogenannten "Legal-Bereich" mit gesetzliche Hinweise gemäß ETRTO wie beispielsweise Wochencode, Größe, E4 und Safety Warnings. Der Legal-Bereich muss nach gesetzlichen Vorgaben auf der unteren Seitenwandhälfte, also der Hälfte der Seitenwand, welche dem Wulstbereich zugewandt ist, angeordnet sein.

Es ist Stand der Technik, die Beschriftung ausschließlich auf glatten Flächen der Seitenwand, also außerhalb von strukturierten Bereichen, anzuordnen. So nimmt die technisch wirksame Struktur nur einen geringen Teil der Seitenwand ein.

Beschriftungen, die auf technisch wirksamen Strukturen der Seitenwand aufgebracht sind, kennt man aus DE 199 28 863 A1, DE 10 2012 105864 A1 sowie EP 0 101 399 A1.

Golfball-artige Oberflächenstrukturen sind bereits aus der JP2014037215 A bekannt. Beschriftungen sind hier umgeben, aber beabstandet, von der Golfballstruktur angeordnet.

Der Erfindung liegt die Aufgabe zugrunde, den technischen Effekt der Struktur auf der Reifenseitenwand zu verbessern.

Die Aufgabe wird erfindungsgemäß durch die Merkmale des Anspruchs 1 gelöst.

Der technische Effekt ist durch eine stark vergrößerte Fläche der technisch wirksamen Struktur verbessert. Diese reicht erfindungsgemäß über die gesamte Reifenseitenwandhöhe und ist über die Reifenseitenwand umlaufend angeordnet. Überraschenderweise ist die Beschriftung gut lesbar, obwohl sie auf (innerhalb) der technisch wirksamen Struktur angeordnet ist. Hierzu muss selbstverständlich die Strukturgröße in einer dem Fachmann bekannten Weise an die Schriftgröße angepasst sein.

Technisch wirksame Strukturen dienen beispielsweise der Reduzierung des Luftwiderstandes, der Selbstreinigung oder dem Schutz vor Beschädigungen des Reifens. "Reifenseitenwandhöhe" meint denjenigen Bereich der Reifenseitenwand, der, wenn der Reifen auf einer üblichen Standardfelge aufgezogen ist, nicht mehr vom Felgenhorn verdeckt wird und in radialer Richtung nach oben bis zur Bodenaufstandsfläche reicht.

"Offshoulder" meint den zum Laufstreifen gehörenden Bereich, der außerhalb der Bodenaufstandsfläche liegt.

Vorzugsweise sind kleine Unterbrechungen der technischen Struktur von weniger als 5% der Gesamtfläche der Reifenseitenwand von der Erfindung mit umfasst.

Vorteilhaft ist es, wenn die Beschriftung erhaben in Bezug auf die Struktur angeordnet ist. Dieses ist formentechnisch einfach zu fertigen und verbessert die Lesbarkeit der Beschriftung.

Vorzugsweise ragt die Oberfläche der Beschriftung in von 0,1 mm bis 1,0 mm über den höchsten Teil der Struktur hinaus.

Die erfindungsgemäße Struktur ist eine vertieft in die Seitenwand eingebrachte Struktur wie eine Golfballstruktur. Es ist Kontrast erzeugt und zudem ist Luftwiderstand des im Betrieb befindlichen Reifens verringert.

Der technische Effekt der Struktur ist weiterhin erhöht, indem die Struktur zusätzlich in der Offshoulder angeordnet ist, wobei die Struktur über die gesamte Höhe der Offshoulder und in Umfangsrichtung der Offshoulder umlaufend angeordnet ist. Die Fläche der technisch wirksamen Struktur ist weiter vergrößert.

Weitere Merkmale, Vorteile und Einzelheiten der Erfindung werden nun anhand der Zeichnungen, die ein schematisches Ausführungsbeispiel darstellen, näher beschrieben. Dabei zeigen die:
Fig. la eine seitliche Aufsicht auf einen Abschnitt eines Fahrzeugluftreifens gemäß dem Stand der Technik;
Fig. 1b einen Längsschnitt durch die Seitenwandoberfläche der Fig. la.
Fig. 2a eine seitliche Aufsicht auf einen Abschnitt eines Fahrzeugluftreifens mit einer nicht erfindungsgemäßen Schraffur, welche jedoch für das Verständnis der erfindungsgemäßen Golfballstruktur hilfreich ist;
Fig. 2b einen Längsschnitt durch die Seitenwandoberfläche der Fig. 2a.

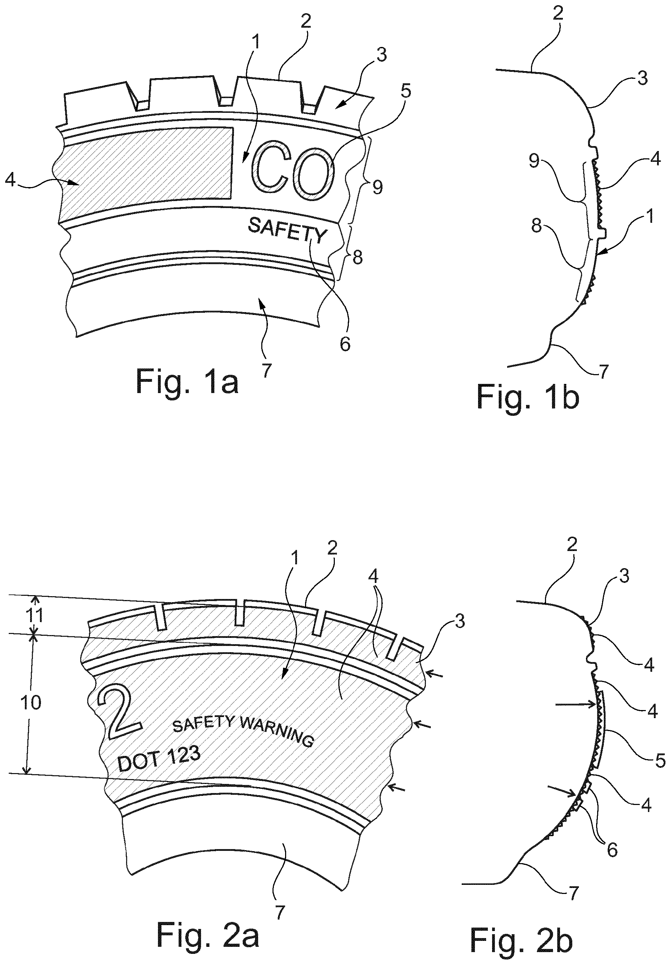

Die Fig la zeigt eine seitliche Aufsicht auf einen Abschnitt eines Fahrzeugluftreifens gemäß dem Stand der Technik, während die Fig. 1b dessen Längsschnitt zeigt. Der Fahrzeugluftreifen ist ein Niederquerschnittsreifen für PKW. Der Fahrzeugluftreifen zeigt eine nicht dargestellte Radialkarkasse, eine mit einem Seitenwandgummistreifen 1 abgedeckte Seitenwand, einen Laufstreifen 2 und einen zwischen dem Laufstreifen 2 und der Seitenwand angeordneten Offshoulder 3 auf. Der Wulstbereich 7 ist nicht mehr sichtbar, wenn der Reifen auf einer Felge angeordnet ist. Auf dem Seitenwandgummistreifen 1 sind eine technisch wirksame Struktur 4, bestehend aus einer Schraffur, sowie Beschriftungen 5, 6 angeordnet. Der Bereich für die Legal-Beschriftung 6 liegt in der unteren, dem Reifenwulst 7 zugewandten Seitenwandhälfte 8. Die Legalbeschriftung 6 ist auf einer glatten Oberfläche angeordnet. In der dem Laufstreifen 2 zugewandten oberen Seitenwandhälfte 9 ist die Beschriftung 5 wie das Unternehmenskennzeichen oder die Reifendimension angeordnet. Die Struktur 4 aus der Schraffur ist in der oberen, dem Laufstreifen 2 zugewandten Reifenseitenwandhälfte 9 in einem eng begrenzten Bereich angeordnet. Die Beschriftung 5 in der oberen Reifenseitenwandhälfte 9 ist nur außerhalb des die Struktur 4 aufweisenden Bereiches auf glattem Untergrund angeordnet.

Die Fig. 2a zeigt eine seitliche Aufsicht auf einen Abschnitt eines nicht erfindungsgemäßen Fahrzeugluftreifens, während die Fig. 2b dessen Längsschnitt zeigt. Der Abschnitt des Fahrzeugreifens der Figuren 2a, 2b unterscheidet sich von dem der Figur la, 1b darin, dass die technisch wirksame Struktur 4 über die gesamte Seitenwandhöhe 10 und über den Seitenwandumfang umlaufend angeordnet ist und dass die Beschriftung 5, 6 erhaben auf der Struktur 4 angeordnet ist. Die Beschriftung 5, 6 weist eine glatte Oberfläche auf. Die technisch wirksame Struktur 4 ist hier ebenfalls eine Schraffur, weist erfindungsgemäß stattdessen jedoch eine Golfballstruktur auf. Die Struktur 4 ist zusätzlich zur kompletten Seitenwandfläche auch im Offshoulder 3 angeordnet. Die Schraffur 4 verläuft im Offshoulder 3 ebenfalls über den Schulterumfang umlaufend und über die gesamte Schulterhöhe 11. Die Schraffuren 4 des Offshoulderbereiches 3 und die des Seitenwandgummistreifens 1 sind gleich ausgestaltet und weisen eine Relieftiefe von 0,2 mm - 0,3 mm auf.

### Bezugszeichenliste

### (Teil der Beschreibung)

- 1: Seitenwandgummistreifen
- 2: Laufstreifen
- 3: Offshoulderbereich
- 4: Technisch wirksame Struktur
- 5: Beschriftung
- 6: Legal-Beschriftung
- 7: Reifenwulst
- 8: Untere Seitenwandhälfte
- 9: Obere Seitenwandhälfte
- 10: Seitenwandhöhe
- 11: Schulterhöhe

## Patentansprüche

1. Fahrzeugluftreifen, insbesondere radialer Bauart, mit einer Karkasse, mit Seitenwänden, mit einem Laufstreifen (2) und mit einem zwischen dem Laufstreifen (2) und der Seitenwand angeordneten Offshoulderbereich (3),
wobei die Karkasse im Seitenwandbereich mit einem Seitenwandgummistreifen (1) nach außen hin abgedeckt ist und wobei auf dem Seitenwandgummistreifen (1) eine technisch wirksame Struktur (4) sowie Beschriftungen (5, 6) angeordnet sind, wobei die technisch wirksame Struktur (4) über die gesamte Seitenwandhöhe (10) und über den Seitenwandumfang umlaufend angeordnet ist und wobei die Beschriftungen (5, 6) auf der Struktur (4) angeordnet sind, **dadurch gekennzeichnet, dass** die Struktur (4) eine vertieft in den Seitenwandgummistreifen (1) eingebrachte Struktur wie eine Golfballstruktur ist.

2. Fahrzeugluftreifen nach Anspruch 1,
**dadurch gekennzeichnet, dass** die Beschriftungen (5, 6) erhaben auf der Struktur (4) angeordnet sind.

3. Fahrzeugluftreifen nach einem oder mehreren der vorangehenden Ansprüche,
**dadurch gekennzeichnet, dass** die Struktur (4) zusätzlich im Offshoulderbereich (3) angeordnet ist, wobei die Struktur (4) über die gesamte Schulterhöhe (11) und in Umfangsrichtung umlaufend angeordnet ist.

## Claims

1. Pneumatic vehicle tyre, in particular of radial construction, having a carcass, having sidewalls, having a tread (2), and having an off-shoulder region (3) arranged between the tread (2) and the sidewall,
wherein the carcass is covered with a sidewall rubber strip (1) towards the outside in the sidewall region and wherein a technically active structure (4) and lettering (5, 6) are arranged on the sidewall rubber strip (1), wherein the technically active structure (4) is arranged over the entire sidewall height (10) and in an encircling manner around the sidewall circumference and wherein the lettering (5, 6) is arranged on the structure (4), **characterized in that** the structure (4) is a structure introduced into the sidewall rubber strip (1) in a recessed manner, such as a golf ball structure.

2. Pneumatic vehicle tyre according to Claim 1,
**characterized in that** the lettering (5, 6) is arranged in a proud manner on the structure (4).

3. Pneumatic vehicle tyre according to one or more of the preceding claims,
**characterized in that** the structure (4) is additionally arranged in the off-shoulder region (3), wherein the structure (4) is arranged over the entire shoulder height (11) and in an encircling manner in the circumferential direction.

## Revendications

1. Pneumatique de véhicule, en particulier de construction radiale, comprenant une carcasse, des parois latérales, une bande de roulement (2) et une région formant épaulement (3) disposée entre la bande de roulement (2) et la paroi latérale, la carcasse étant recouverte vers l'extérieur, dans la région des parois latérales, d'une bande de caoutchouc de paroi latérale (1) et une structure techniquement active (4) et des inscriptions (5, 6) étant disposées sur la bande de caoutchouc de paroi latérale (1), la structure techniquement active (4) étant disposée périphériquement sur toute la hauteur (10) de la paroi latérale et sur le pourtour de la paroi latérale, et les inscriptions (5, 6) étant disposées sur la structure (4), **caractérisé en ce que** la structure (4) est une structure telle qu'une structure de balle de golf qui est encastrée dans la bande de caoutchouc de paroi latérale (1).

2. Pneumatique de véhicule selon la revendication 1, **caractérisé en ce que** les inscriptions (5, 6) sont disposées en relief sur la structure (4).

3. Pneumatique de véhicule selon l'une au moins des revendications précédentes, **caractérisé en ce que** la structure (4) est en outre disposée dans la région d'épaulement (3), la structure (4) étant disposée périphériquement sur toute la hauteur (11) de l'épaulement et dans la direction périphérique.
